(19) Europäisches Patentamt
European Patent Office
Office européen des brevets

(11) EP 1 153 730 B1

(12) **EUROPEAN PATENT SPECIFICATION**

(45) Date of publication and mention
of the grant of the patent:
**26.08.2009 Bulletin 2009/35**

(51) Int Cl.:
**B29C 59/04** *(2006.01)* **B29C 47/88** *(2006.01)*
**G02F 1/1333** *(2006.01)*

(21) Application number: **00902984.4**

(22) Date of filing: **15.02.2000**

(86) International application number:
**PCT/JP2000/000836**

(87) International publication number:
**WO 2000/048820 (24.08.2000 Gazette 2000/34)**

(54) **PRODUCTION METHOD FOR THERMOPLASTIC POLYMER SHEET**

HERSTELLUNGSVERFAHREN FÜR THERMOPLASTISCHE KUNSTSTOFF-FLACHFOLIE

PROCEDE DE FABRICATION DE FEUILLE POLYMERE THERMOPLASTIQUE

(84) Designated Contracting States:
**DE FR GB NL**

(30) Priority: **16.02.1999 JP 3782499**
**25.08.1999 JP 23884699**

(43) Date of publication of application:
**14.11.2001 Bulletin 2001/46**

(73) Proprietor: **SUMITOMO BAKELITE CO., LTD.**
**Tokyo 140-0002 (JP)**

(72) Inventors:
• **ARAI, Susumu**
**Sumitomo Bakelite Company Limited**
**Shinagawa-ku,**
**Tokyo 140-0002 (JP)**
• **TANAKA, Junji**
**Sumitomo Bakelite Company Limited**
**Shinagawa-ku,**
**Tokyo 140-0002 (JP)**

• **EGUCHI, Toshimasa**
**Sumitomo Bakelite Company Ltd.**
**Shinagawa-ku,**
**Tokyo 140-0002 (JP)**

(74) Representative: **Vossius, Volker et al**
**Dr. Volker Vossius**
**Patent- und Rechtsanwaltskanzlei**
**Geibelstrasse 6**
**81679 München (DE)**

(56) References cited:
**EP-A- 0 614 748** **EP-A- 0 914 926**
**FR-A- 1 544 480** **JP-A- 04 031 030**
**JP-A- 09 239 812** **JP-A- 09 272 149**
**US-A- 2 431 042** **US-A- 4 696 779**
**US-A- 5 211 899** **US-A- 5 242 742**
**US-A- 5 242 742**

## Description

TECHNICAL FIELD

The present invention relates to a process for producing a thermoplastic polymer sheet small in plane retardation, superior in surface smoothness and small in sheet warpage, at a high productivity. Such a sheet is suitable as an optical sheet.

BACKGROUND ART

Glass substrates have heretofore been used as a transparent electrode substrate for liquid crystal display device. Liquid crystal display devices using a glass substrate have had drawbacks in that they are difficult to produce in a small thickness because the glass substrate per se is thick and they are also difficult to produce in a light weight; moreover, they have had problems in flexibility and impact resistance.

To alleviate these drawbacks possessed by liquid crystal display devices using a glass substrate, it has been investigated to produce a liquid crystal panel using a plastic film to achieve the weight reduction and impact resistance improvement of the liquid crystal panel. For example, US 5,242,742 describes a method of manufacturing solid extruded plastic sheet and film having certain surface qualities, the method comprising extruding a thermoplastic material in the thermoplastic state from a slot nozzle, to form a flat strip, smoothing the surfaces of the strip, and cooling the strip. US 2,431,042 discloses a process for preparing clear films from normally solid ethylene polymers. EP 0 614 748 A1 describes a method for producing a non-stretched, super-transparent sheet or film of a thermoplastic resin using a cooling roll or metal belt. FR 1.544.480 discloses a process and a device for producing a patterned polymer sheet, wherein a pattern and transport element (14) transports a hot extruded sheet at a linear constant speed to a vacuum chamber (20), where the extruded sheet is sucked and contacts with a sieve forming the element (14) resulting in a patterned sheet which then is cooled rapidly. US 5,211,899 describes a process for producing a polypropylene resin sheet or film which comprises (a) introducing a polypropylene resin in a film form, which has been extruded from a T-die in a molten state, into a slit through which cooling water is flowing, (b) passing the polypropylene resin film between nip rolls of the half immersed type, said nip rolls being in contact with a lower water bath, and (c) pressing between a pair of metal belts the obtained sheet or film from both sides thereof under a particular pressure, while heating at a temperature of 155-160°C, wherein the metal belts have a surface roughness of not more than 0.1 $\mu$m. EP 0 816 900 A2 relates to a phase retarder film whose durability is improved, and a liquid display device using the same. EP 0 617 111 A1 describes an optically anisotropic film made of an oriented polymerized liquid oligomer or a composition thereof, a process for producing such a film, a laminate of an optically anisotropic film and a base, a composite retardation film consisting of said laminate and a uniaxially oriented retardation film, and a liquid crystal display device using them.

Furthermore, in JP-A-53-68099 and JP-A-54-126559, it is described to continuously produce a liquid crystal display device panel using, in place of a glass substrate, a long polyester film having-an electroconductive metal oxide substance vapor-deposited thereon. This panel, however, was not sufficient in optical properties.

In order to solve this problem, investigations were made to apply, to such a use, a thermoplastic resin sheet superior in optical isotropy. However, it was found out that the retardation of sheet caused by the molecular orientation generated in melt extrusion and sheeting becomes a serious drawback. In, for example, TN (twisted nematic) type liquid crystal display devices, the incident light, which has been changed into a linearly polarized light by a polarizing plate, partially becomes an elliptically polarized light owing to the double refraction of the transparent electromagnetic sheet used and the deviation at the sheet surface; therefore, there arise a reduction in contrast and a non-uniformity in display.

Further in STN (super twisted nematic) type liquid crystal display devices, it is impossible to obtain a display equal to or finer than the display in TN type liquid crystal display devices, owing to the optical phase difference brought about by the double refraction of the transparent electromagnetic sheet used; further, the retardation generated by the liquid crystal molecule used makes very complex the optimization of the liquid crystal cell combination of polarizing plate, phase difference plate and transparent electrode sheet, which optimization is necessary for compensation of optical phase difference.

As liquid crystal cells using a thermoplastic resin sheet have come to be used practically, the area of display has become larger and, in order to make uniform the distance between electrodes, that is, maintain the required gap between electrodes, the base material used is required to show substantially no deformation. The thickness of the base material was 100 $\mu$m at first and now is more than 300 $\mu$m in some cases; and development using a polymer sheet is also under way. However, there remain various problems, for example, a problem of contrast of liquid crystal display due to plane retardation, a problem of visible defect due to surface property and surface smoothness, peeling of encapsulated liquid crystal portion due to warpage, and deformation of device; and urgent improvements therefor are desired.

In order to improve the phase difference possessed by optical materials, there were proposed a method of using a particular polycarbonate having structural units of a particular bivalent phenol (JP-A-63-108023); a method of blending a material of positive specific double refraction and a material of negative specific double refraction [T. Inoue et al., Journal of Polymer Science, Part B, 25, 1629 (1987)]; a method of graft-copolymerizing a polycarbonate of positive specific double refraction and a polystyrene of negative specific double refraction (Nikkei New Materials, 1988/Sept. 26 Issue, pp. 60-62); a method of using a norbornene type resin having polar groups (Functional Material, 1993/Jan. Issue, pp. 40-52); and so forth. However, none of these proposals has been put into practical use.

Further, in a short time from resin extrusion to cooling and solidification of the extruded sheet by a cooling roll and subsequent winding of the sheet, there appear a shear stress caused in the extrusion die and a temperature distribution in the flow and thickness directions of the sheet (the temperature distribution is brought about by stretching of the resin extruded from die lips); as a result, it has been impossible to avoid the generation of molecular orientation in the surface or thickness direction of the sheet. This tendency is more striking as the thickness of a sheet is larger, and has become a more serious problem as the area of a display has become larger.

Surface smoothness of a sheet is low when the sheet is produced by the generally known melt extrusion method using a T die or a coat hanger die, because there appear, on the sheet, streaks (called die lines) which are believed to be generated by the shear stress or residence in the flow path of a thermoplastic resin polymer or by the surface condition of the die and the precision of the die lips. As a means for improving surface smoothness, a solvent casting method is known which comprises dissolving a thermoplastic polymer in a solvent, coating the resulting solution on a film, a metal belt or the like, and drying the coated solution. This method, however, has problems of productivity and residual solvent in the resulting sheet when the sheet thickness is large.

There is another method which comprises nipping a melt-extruded thermoplastic polymer between rolls, or between a metal belt and a roll or between metal belts (these rolls and metal belts each have a surface finished in high precision) to transfer the roll or metal belt surface onto the polymer. This nipping, however, generates optical strain, i.e. retardation, making the obtained sheet unusable as an optical sheet. Also, an injection molding method of injecting a thermoplastic polymer into a die of high precision surface and conducting molding is considered to be a promising candidate for obtaining surface smoothness, because the method is capable of controlling retardation as known in CD and further has no productional problem. In the injection molding method, however, the sheet thickness limit is several mms and it is impossible to produce a sheet having a thickness of several hundreds of $\mu$ms.

Post-processing is also known for improvement of surface property. However, a method of pressing a sheet using a plate of high surface precision to improve the surface smoothness of the sheet is low in productivity and unsuited for mass production. A method of conducting stretching as known in a PET film gives a sheet of improved surface but generates double refraction; therefore, it is unsuited for production of an optical sheet.

With respect to the warpage of a sheet, in the generally-known method for sheet cooling using a cooling roll, it is believed that sheet warpage generates because the sheet to be cooled and solidified takes a shape of the cooling roll. For solving the problem, use of a very large cooling roll of large radius of curvature is considered but such a large cooling roll is not economical.

It is also considered that sheet warpage can be solved by cooling and solidifying a polymer sheet on a flat plate having no curvature. However, a temperature difference appears between the surface of the side of the polymer sheet contacting with the cooling surface of the flat plate and the surface of the opposite side of the polymer sheet, which easily invites the warpage of the sheet.

Meanwhile, the injection molding method, the pressing method using a plate, the nipping method using a metal belt, etc. generate no sheet warpage; however, as mentioned previously, these methods have a problem in plane retardation, for use as a method for producing an optical sheet.

Thus, with conventional techniques, it has been difficult to stably and continuously produce a thermoplastic polymer sheet which is superior in surface smoothness, small in double refraction and small in warpage.

The aim of the present invention is to provide a process for continuously producing a thermoplastic polymer sheet which is superior in surface smoothness, small in double refraction, small in optical phase difference and small in warpage and which can be safely used as a liquid crystal display panel.

DISCLOSURE OF THE INVENTION

The present invention lies in a process for producing a thermoplastic polymer sheet, which comprises converting a thermoplastic polymer sheet formed by melt extrusion from a T die or a coat hanger die, to a cooled sheet by using a metal belt having a maximum surface roughness Rmax of 0.1 $\mu$m or less and also such a length that the time of contact of the extruded thermoplastic polymer sheet with and time of cooling of the extruded thermoplastic polymer sheet at the metal belt portion free from any curvature in the flow direction of the extruded thermoplastic polymer sheet becomes 20 seconds or more, wherein the temperature (V1) of the metal belt portion with which the thermoplastic polymer sheet first comes in contact, is in a range of Tg-20$\leq$V1$\leq$ Tg+100 (°C) relative to the glass transition temperature (Tg) of the thermoplastic polymer, the temperature (V2) of the metal belt portion free from any curvature in the flow direction of the thermoplastic polymer sheet is in a range of Tg-30$\leq$V2$\leq$Tg+30 (°C), the temperature (V3) of the metal belt portion from which the cooled thermoplastic polymer sheet is detached, is V3$\leq$Tg-20 (°C), preferably V3<Tg-100 (°C), and V3$\leq$V2$\leq$V1 (°C).

In the preferred embodiments of the present invention.

(1) the surface temperature of the side of the thermoplastic polymer sheet in contact with the metal belt is made the same as the surface temperature of the opposite side of the thermoplastic polymer sheet, and/or

(2) the maximum surface roughness Rmax of the T die or coat hanger die surface at which the thermoplastic polymer passes is 0.5 $\mu$m or less and the lip clearance of the die is 3 to 50 times the thickness of the thermoplastic polymer sheet.

DETAILED DESCRIPTION OF THE INVENTION

The glass transition temperature (Tg) of the thermoplastic polymer used in the present invention is preferably 150°C or more, more preferably 180°C or more. When the glass transition temperature (Tg) of the thermoplastic polymer is less than 150°C, the sheet is softened during the heat treatments conducted in the steps for assembling of a liquid crystal device, for example, at the time of firing of alignment film or curing of seal, and the resulting device does no work smoothly.

As the thermoplastic polymer having a Tg of 150°C or more, used in the present invention, there can be mentioned, for example, a polysulfone, a polyether sulfone, a polyether imide, a highly heat-resistant polycarbonate, a norbornene type polymer, and blended resins thereof. Of these polymers, a polyether sulfone is preferred. There can also be used an imide-modified polymer, for example, an imide-modified polymethyl methacrylate.

The thickness of the thermoplastic polymer sheet obtained by the process of the present invention is preferably 50 to 1,000 $\mu$m, more preferably 150 to 500 $\mu$m. When the thickness of the polymer sheet is less than 50 $\mu$m, such a sheet is difficult to handle when used in a production line of a general-purpose liquid crystal panel using a glass substrate. Further, keeping of a required liquid crystal cell gap is difficult and, particularly in a liquid crystal display device of large area, keeping of a required cell gap is impossible. When the thickness of the polymer sheet is more than 1,000 $\mu$m, the resulting liquid crystal display gives rise to inferior display which is called double image; moreover, the resulting liquid crystal display device has a large thickness, which is not preferred from the functional standpoint.

The retardation of plane of the thermoplastic polymer sheet obtained by the process of the present invention is preferably 20 nm or less, more preferably 10 nm or less. "Retardation of plane" is represented by:

$$Re = (Nx - Ny) \times d$$

wherein Nx is the maximum refractive index of a polymer sheet, Ny is the minimum refractive index of the polymer sheet, and d is the thickness of the polymer sheet. When the retardation is more than 20 nm, the contrast of the liquid crystal display is reduced and it is impossible to see the display clearly.

The maximum surface roughness (Rmax) of the thermoplastic polymer sheet obtained by the process of the present invention is preferably 0.1 $\mu$m or less, more preferably 0.05 $\mu$m or less. When the maximum surface roughness is more than 0.1 $\mu$m, abnormality appears in the gap of liquid crystal cell, resulting in inferior display. The warpage of the thermoplastic polymer sheet is preferably 5 mm or less, further preferably 3 mm or less, more preferably 1 mm or less in a square of 300 mm x 300 mm. When the warpage of the polymer sheet is more than 5 mm, keeping of the required gap of liquid crystal cell is difficult, resulting in inferior display; moreover, the stress caused by the sheet warpage gives rise to deformation of liquid crystal cell, resulting in peeling of sealed portion, i.e. reduced reliability.

The maximum surface roughness (Rmax) of the die surface at which the heat-melt thermoplastic polymer passes, is preferably 0.5 $\mu$m or less, more preferably 0.3 $\mu$m or less. When the maximum surface roughness (Rmax) is more than 0.5 $\mu$m, the surface of the polymer sheet formed by extrusion from the die has, owing to the influence of the surface property of the die, streaks which are called die lines, i.e. uneven streaks, and the streaks are difficult to delete even by passing the sheet through a metal belt.

The lip clearance of the die is preferably 3 to 50 times, more preferably 5 to 40 times the thickness of the sheet. When the lip clearance of the die is less than 3 times the sheet thickness, the stretching action for the polymer sheet formed by melt extrusion from the die is small, resulting in deterioration of the surface roughness of the polymer sheet. The improvement therefor is possible by reducing the surface roughness of the die, but it has technical and economical problems. When the lip clearance of the die is more than 50 times the sheet thickness, the surface roughness of the polymer sheet is improved; however, the sheet thickness is difficult to control, resulting in larger variation in sheet thickness, and the polymer sheet undergoes a stretching action, resulting in deterioration of the retardation of the polymer sheet.

The maximum surface roughness (Rmax) of the metal belt is required to be 0.1 $\mu$m or less, preferably 0.05 $\mu$m or less. The surface of the metal belt is transferred onto the polymer sheet; therefore, when the surface roughness of the metal belt is more than 0.1 $\mu$m, the surface roughness of the polymer sheet becomes more than 0.1 $\mu$m as well and such a polymer sheet has a problem when used as an optical sheet.

The length of the metal belt needs to be such that the cooling time of the polymer sheet at the metal belt portion free from any curvature in the flow direction of the polymer sheet becomes 20 seconds or more, preferably 30 seconds or more. When there is used a metal belt having such a length that the cooling time is less than 20 seconds, the polymer sheet is not cooled sufficiently, allowing the sheet to have warpage. Further, insufficient cooling gives a polymer sheet of inferior retardation.

The temperature (V1) of the metal belt portion with which the thermoplastic polymer sheet formed by melt extrusion form the die lips first comes in contact, is in a range of Tg-20≦V1≦Tg+100 (°C), preferably Tg-10≦V1≦Tg+80 (°C), relative to the glass transition temperature (Tg) of the thermoplastic polymer. When V1 is lower than Tg-20 (°C), the polymer sheet formed by melt extrusion from the die is cooled rapidly, resulting in poor appearance called rapid cooling. When V1 is higher than Tg+100 (°C), the polymer sheet is cooled at a temperature higher than the die temperature, which is unreasonable and may incur the thermal decomposition of the polymer sheet.

The temperature (V2) of the metal belt portion free from any curvature in the flow direction of the polymer sheet is in a rage of Tg-30≦V2≦Tg+30 (°C), preferably Tg-20≦V2≦Tg+20 (°C). When V2 is lower than Tg-30 (°C), cooling wrinkles are generated as in V1. When V2 is higher than Tg+30 (°C), the polymer sheet is not sufficiently solidified, resulting in generation of sheet warpage and deterioration of sheet retardation. The temperature V2 of the metal belt portion free from any curvature may be set so that the temperature becomes gradually lower as the sheet flows on the metal belt portion.

The temperature (V3) of the metal belt portion from which the polymer sheet cooled by the metal belt is detached, is V3≦Tg-20 (°C), preferably V3<Tg-100 (°C). The molecular structure of the thermoplastic polymer sheet is determined by V1 and V2, and the surface smoothness or plane retardation of the polymer sheet does not change; therefore, how stably the polymer sheet can be detached from the metal belt, is a key point for continuous production. When V3>Tg-20 (°C), the polymer sheet may melt and adhere to the metal belt when detached from the metal belt, which induces poor appearance and makes impossible the stable and continuous production of the polymer sheet.

Meanwhile, the lower limit of V3 can be any temperature at which the polymer sheet can be stably detached from the metal belt without generation of cooling wrinkles, and is appropriately determined depending upon the kind of the polymer sheet.

V1, V2 and V3 must satisfy a relation of V3 ≦ V2≦V1 (°C). When this relation is not met, there is conducted no efficient production of the polymer sheet.

The surface temperature of the side of the thermoplastic polymer sheet not in contact with the metal belt is preferably made the same as the temperature of the metal belt. Thereby, the temperature distribution in the thickness direction of the polymer sheet can be decreased and the warpage of the polymer sheet caused by thermal history can be improved. For heating of the metal belt and the side of the polymer sheet not in contact with the metal sheet, there is considered heating by a infrared heater, a far-infrared heater, a heating medium oil, steam or the like, and any heating can be used.

In order to adhere the polymer sheet formed by melt extrusion from the die, to the metal belt, it is possible to spray an air controlled at the same temperature as that of the metal belt; or, a high voltage may be applied to the polymer sheet for charging and subsequent adhesion to the metal belt.

A liquid crystal display device produced using the polymer sheet obtained as above gives a flat liquid crystal display free from visible defect.

BEST MODE FOR CARRYING OUT THE INVENTION

Hereinafter, the present invention is described by way of an Example and Comparative Examples.

The properties of sheet were measured by the following methods.

(1) Thickness of sheet
A polymer sheet was measured for thickness in the width direction at intervals of 20 mm using a contact type dial gauge, and the average value of the measurements was taken as the thickness of the polymer sheet.

(2) Maximum surface roughness (Rmax) of polymer sheet
A polymer sheet was measured for surface roughness (surface unevenness) in the width direction at a scanning width of 2 mm over the entire width using a contact type precision level difference meter (ALPHA-STEP 200, a product of TENCOR INSTRUMENTS), and the maximum surface unevenness of the measurements was taken as the maximum surface roughness of the polymer sheet.

(3) Retardation of polymer sheet
A polymer sheet was measured for retardation at a wavelength of 550 nm, using a polarizing microscope (BH2, a product of Olympus Optical Co., Ltd.) and a BEREK compensator.

(4) Warpage of polymer sheet
From a polymer sheet was cut off a square sample of 300 mm in sheet flow direction and 300 mm in sheet width direction. The square sample was placed on a platen with the upper side of the polymer sheet directed upward or downward, and the maximum height of the polymer sheet from the platen was measured. The maximum value of the measurements was taken as the warpage of the polymer sheet.

(5) Maximum surface roughness (Rmax) of metal belt
A metal belt was measured for surface unevenness in the width direction at a cut-off length of 0.8 mm over the entire width using a contact type surface roughness tester (Surftest 301, a product of K.K. Mitsutoyo), and the maximum unevenness value of the measurements was taken as the maximum surface roughness (Rmax) of the metal belt.

(6) Maximum surface roughness (Rmax) of die

A die was measured for surface unevenness in the width direction at a cut-off length of 0.8 mm over the entire width using a contact type surface roughness tester (Surftest 301, a product of K.K. Mitsutoyo), and the maximum unevenness value of the measurements was taken as the maximum surface roughness (Rmax) of the die.

Example 1

A sheet of 400 $\mu$m in thickness was produced from a polyether sulfone resin having a Tg of 226°C (VICTREX PES 4100, a product of Sumitomo Chemical Co., Ltd.), by using a die having a maximum surface roughness (Rmax) of 0.4 $\mu$m and a lip clearance of 3 mm and a metal belt having a maximum surface roughness (Rmax) of 0.1 $\mu$m and such a length that the time of contact of a polymer sheet formed by extrusion from the die, with the metal belt portion free from any curvature in the flow direction of the extruded polymer sheet became 22 seconds. In this operation, the temperature (V1) of the metal belt was kept at 250°C, the temperature (V2) was kept at 210°C, and the temperature (V3) was kept at 110°C; and the side of the polymer sheet not in contact with the metal belt was heated by an infrared heater and allowed to have the same surface temperature as that of the side of the polymer sheet in contact with the metal belt. As a result, there could be stably and continuously obtained a polymer sheet having a plane retardation of 15 nm, a maximum surface roughness (Rmax) of 0.06 $\mu$m at the side which had contacted with the metal belt, and a maximum warpage of 2 mm in a 300 mm x 300 mm square.

On the both sides of the sheet of 400 $\mu$m in thickness obtained in Example 1 was coated, using a gravure roll coater, a uniform solution obtained by stirring, at 50°C, 100 parts by weight of an epoxy acrylate prepolymer (molecular weight = 1,540, melting point = 70°C) (VR-60, a product of Showa Highpolymer Co., Ltd.), 400 parts by weight of butyl acetate, 100 parts by weight of cellosolve acetate and 2 parts by weight of benzoin ethyl ether. The resulting sheet was heated at 80°C for 10 minutes to remove the solvent contained in the coated solution, followed by application of a light generated by a high-pressure mercury lamp of 80 W/cm, from a distance of 15 cm for 30 seconds, to give rise to resin curing and form an organic layer of 0.5 $\mu$m in thickness on both sides of the sheet. Then, thereon was formed an inorganic layer (a $SiO_2$ film of 500 A in thickness) by introducing a mixed gas of oxygen/9% argon gas at an initial vacuum of 3x10$^{-4}$ Pa by a DC magnetron method and employing 3x10$^{-1}$ Pa. The inorganic film had an oxygen barrier property of 1 cc/24 hr·m$^2$ as measured by a MOCON method and a surface resistivity of 8.1x10$^{12}$ $\Omega$.

Thereafter, a transparent electroconductive film made of $In_2O_3$ and $SnO_2$, having an atomic ratio of In/(In+Sn)= 0.98 was formed by introducing a mixed gas of oxygen/4% argon gas at an initial vacuum of 3x10$^{-4}$ Pa by the same DC magnetron method and employing 1x10$^{-1}$ Pa. A measurement indicated that the film had a thickness of 1,600 Å and a specific resistance of 4x10$^{-4}$ $\Omega$-cm.

After the above film formation, a resist was coated, followed by development. Pattern etching was conducted using 10 vol. % HCl of 40°C as an etching solution, to form a pattern for active matrix of 3 in in diagonal length and L/S = 150/50 $\mu$m. Then, an alignment film was formed by coating; firing was conducted at 150°C for 2 hours; then, a rubbing treatment was applied. Thereafter, a spacer was spread; a sealing agent was coated and cured at 150°C to produce a cell; and a liquid crystal was injected into the cell. A polarizing plate was laminated at the position of the cell giving the maximum contrast, and a dynamic operation inspection was conducted. As a result, there was no visible defect caused by the abnormalities of sheet retardation and liquid crystal cell gap, and a display of good contrast was seen. Further, the liquid crystal cell had a flat shape and showed no warpage on a platen.

Comparative Example 1

It was tried to produce a polymer sheet in the same manner as in Example 1 except that the temperature (V3) of the metal belt when the polymer sheet was detached from the metal belt, was changed to 140°C. However, the polymer sheet caused fusion-bonding to the metal belt and was difficult to detach therefrom, making impossible the continuous production of the sheet. As a result, although the resultant polymer sheet had the same plane retardation of 15 nm as in Example 1, the warpage varied in a range of 2 to 7 mm. Using the polymer sheet, a liquid crystal display device was produced in the same manner as in Example 1; however, keeping of the liquid crystal cell gap was difficult, and inferior display appeared.

Comparative Example 2

In Example 1, the temperature (V1) was changed to 190°C. As a result, cooling wrinkles appeared on the metal belt and sheet production was impossible.

Comparative Example 3

In Example 1, the temperature (V2) was changed to 265°C. As a result, the resultant polymer sheet had a warpage of 15 mm and a plane retardation of 70 nm. Using this sheet, a liquid crystal cell was produced in the same manner as in Example 1. The liquid crystal cell gave an inferior contrast, making impossible clear recognition of display.

Comparative Example 4

In Example 1, the temperature (V2) was changed to 180°C. As a result, the resultant polymer sheet had a plane retardation of 40 nm. Using this sheet, a liquid crystal cell was produced in the same manner as in Example 1. The cell showed a visible defect caused by the abnormal cell gap.

Comparative Example 5

In Example 1, the maximum surface roughness (Rmax) of the metal belt was changed to 0.3 $\mu$m. As a result, the resultant sheet had the maximum surface roughness (Rmax) of 0.5 $\mu$m. Using this sheet, a liquid crystal cell was produced in the same manner as in Example 1. The cell showed a visible defect caused by the abnormal cell gap.

Comparative Example 6

In Example 1, there was used a metal belt having such a length that the time of contact of a polymer sheet formed by extrusion from a die, with the metal belt portion free from any curvature in the flow direction of the extruded polymer sheet became 15 seconds. As a result, the resultant polymer sheet had a plane retardation of 45 nm and a warpage of 12 mm.

Comparative Example 7

In Example 1, the infrared heater provided at the side of the polymer sheet not in contact with the metal belt was put in an off state. The resultant polymer sheet had a plane retardation of 25 nm and a warpage of 8 mm. Using this sheet, a liquid crystal cell was produced in the same manner as in Example 1. In the liquid crystal cell, the contrast was inferior, the display was not clear, display unevenness appeared owing to the inferior cell gap, and there was a warpage.

Comparative Example 8

In Example 1, the lip clearance of the die was set at 1 mm. The resultant polymer sheet had a maximum surface roughness (Rmax) of 1.8 $\mu$m. Using this sheet, a liquid crystal cell was produced in the same manner as in Example 1. The cell showed a visible defect caused by the abnormal cell gap.

As clear from the above Example, the present invention has enabled a process for stable and continuous production of a thermoplastic polymer sheet which is small in plane retardation, superior in surface smoothness and small in substrate warpage. The sheet obtained by the present invention is most suited as an optical sheet and, when used as a transparent electrode sheet for flexible liquid crystal display device, has provided a liquid crystal display panel free from display unevenness and giving a very fine display.

INDUSTRIAL APPLICABILITY

The thermoplastic polymer sheet obtained by the present production process is most suited as an optical sheet and, when used particularly as a transparent electrode sheet for flexible liquid crystal display device, can provide a liquid crystal display panel free from display unevenness and giving a very fine display.

**Claims**

1. A process for producing a thermoplastic polymer sheet, which comprises converting a thermoplastic polymer sheet formed by melt extrusion from a T die or a coat hanger die, to a cooled sheet by using a metal belt having a maximum surface roughness Rmax of 0.1 $\mu$m or less, **characterized in that** the belt has such a length that the time of contact of the extruded thermoplastic polymer sheet with and time of cooling of the extruded thermoplastic polymer sheet at the metal belt portion free from any curvature in the flow direction of the extruded thermoplastic polymer sheet becomes 20 seconds or more, wherein the temperature V1 of the metal belt portion with which the thermoplastic polymer sheet first comes in contact, is in a range of Tg-20$\leq$V1$\leq$Tg+100 °C relative to the glass transition temperature (Tg) of the thermoplastic polymer, the temperature V2 of the metal belt portion free from any curvature in the flow direction of the thermoplastic polymer sheet is in a range of Tg-30$\leq$V2$\leq$Tg+30 °C, the temperature V3 of the metal belt portion from which the cooled thermoplastic polymer sheet is detached, is V3$\leq$Tg-20 °C, and the temperatures V1, V2 and V3 satisfy V3$\leq$V2$\leq$V1 °C.

2. A process for producing a thermoplastic polymer sheet according to Claim a, wherein V3<Tg-100 °C.

3. A process for producing a thermoplastic polymer sheet according to Claim 1 or 2, wherein the surface temperature of the side of the thermoplastic polymer sheet in contact with the metal belt is made the same as the surface temperature of the opposite side of the thermoplastic polymer sheet.

4. A process for producing a thermoplastic polymer sheet according to any of Claims 1 to 3, wherein the maximum surface roughness Rmax of the T die or coat hanger die surface at which the thermoplastic polymer passes is 0.5 $\mu$m or less and the lip clearance of the die is 3 to 50 times the thickness of the thermoplastic polymer sheet.

## Patentansprüche

1. Verfahren zum Herstellen einer thermoplastischen Polymerfolie, das ein Umwandeln einer thermoplastischen Polymerfolie, die durch Schmelzextrusion aus einer T-Düse oder einer Kleiderbügeldüse geformt wurde, in eine abgekühlte Folie unter Verwendung eines Metallbands mit einer maximalen Oberflächenrauheit $R_{max}$ von 0,1 $\mu$m oder weniger umfasst, **dadurch** charakterisiert, dass das Band eine Länge aufweist, so dass die Kontaktzeitspanne der extrudierten thermoplastischen Polymerfolie mit dem Metallbandanteil, der frei von jeglicher Krümmung in der Flussrichtung der extrudierten thermoplastischen Polymerfolie ist, und die Abkühlzeitspanne der extrudierten thermoplastischen Polymerfolie bei dem Metallbandanteil, der frei von jeglicher Krümmung in der Flussrichtung der extrudierten thermoplastischen Polymerfolie ist, 20 Sekunden oder mehr wird, wobei die Temperatur V1 des Metallbandanteils, mit dem die thermoplastische Polymerfolie zuerst in Kontakt kommt, in einem Bereich von Tg-20≦V1≦Tg+100 °C relativ zur Glasübergangstemperatur (Tg) des thermoplastischen Polymers liegt, die Temperatur V2 des Metallbandanteils, der frei von jeglicher Krümmung in der Flussrichtung der thermoplastischen Polymerfolie ist, in einem Bereich von Tg-30≦V2≦Tg+30 °C liegt, für die Temperatur V3 des Metallbandanteils, von dem die abgekühlte thermoplastische Polymerfolie abgelöst wird, V3≦Tg-20 °C gilt und die Temperaturen V1, V2 und V3 der Gleichung V3≦V2≦V1 °C genügen.

2. Verfahren zum Herstellen einer thermoplastischen Polymerfolie gemäß Anspruch 1, wobei V3<Tg-100 °C gilt.

3. Verfahren zum Herstellen einer thermoplastischen Polymerfolie gemäß Anspruch 1 oder 2, wobei die Oberflächentemperatur der Seite der thermoplastischen Polymerfolie, die mit dem Metallband in Kontakt steht, gleich zu der Oberflächentemperatur der gegenüberliegenden Seite der thermoplastischen Polymerfolie gemacht wird.

4. Verfahren zum Herstellen einer thermoplastischen Polymerfolie gemäß einem der Ansprüche 1 bis 3, wobei die maximale Oberflächenrauheit $R_{max}$ der T-Düsen- oder Kleiderbügeldüsenoberfläche, an der das thermoplastische Polymer vorbeigeht, 0,5 $\mu$m oder weniger beträgt und der Lippenabstand der Düse 3- bis 50-mal die Dicke der thermoplastischen Polymerfolie ist.

## Revendications

1. Procédé de production d'une feuille de polymère thermoplastique, qui comprend la conversion d'une feuille de polymère thermoplastique formée par extrusion en fusion à partir d'une filière en T ou d'une tête-filière plate alimentée par canal portemanteau, en une feuille refroidie par utilisation d'une courroie en métal ayant une rugosité de surface maximale Rmax de 0,1 $\mu$m ou moins, **caractérisé en ce que** la courroie a une longueur telle que le temps de contact de la feuille de polymère thermoplastique extrudée et le temps de refroidissement de la feuille de polymère thermoplastique extrudée avec la portion de courroie en métal dépourvue de toute courbure dans la direction d'écoulement de la feuille de polymère thermoplastique extrudée deviennent de 20 secondes ou plus, dans lequel la température V1 de la portion de courroie en métal avec laquelle la feuille de polymère thermoplastique vient en contact en premier est dans une gamme de Tg - 20 ≦ V1 ≦ Tg + 100 °C relativement à la température de transition vitreuse (Tg) du polymère thermoplastique, la température V2 de la portion de courroie en métal dépourvue de toute courbure dans la direction d'écoulement de la feuille de polymère thermoplastique est dans une gamme de Tg - 30 ≦ V2 ≦Tg + 30 °C, la température V3 de la portion de courroie en métal à partir de laquelle la feuille de polymère thermoplastique refroidie est détachée est V3 ≦ Tg - 20 °C, et les températures V1, V2 et V3 satisfont V3 ≦ V2 ≦ V1 °C.

2. Procédé de production d'une feuille de polymère thermoplastique selon la revendication 1, dans lequel V3 < Tg- 100 °C.

3. Procédé de production d'une feuille de polymère thermoplastique selon la revendication 1 ou 2, dans lequel la température de surface du côté de la feuille de polymère thermoplastique en contact avec la courroie en métal est amenée à la même valeur que la température de surface du côté opposé de la feuille de polymère thermoplastique.

4. Procédé de production d'une feuille de polymère thermoplastique selon l'une quelconque des revendications 1 à 3, dans lequel la rugosité de surface maximale Rmax de la surface de la filière en T ou de la tête-filière plate alimentée par canal portemanteau au niveau de laquelle le polymère thermoplastique passe est de 0,5 $\mu$m ou moins et la dépouille de la lèvre de la filière est de 3 à 50 fois l'épaisseur de la feuille de polymère thermoplastique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5242742 A
- US 2431042 A
- EP 0614748 A1
- FR 1544480
- US 5211899 A
- EP 0816900 A2
- EP 0617111 A1
- JP 53068099 A
- JP 54126559 A
- JP 63108023 A

**Non-patent literature cited in the description**

- **T. Inoue et al.** *Journal of Polymer Science,* 1987, vol. 25, 1629
- *Nikkei New Materials,* 26 September 1988, 60-62
- *Functional Material,* January 1993, 40-52